(19) Europäisches Patentamt

European Patent Office

Office européen des brevets

(11) **EP 1 646 056 A1**

(12) **EUROPEAN PATENT APPLICATION**

(43) Date of publication:
**12.04.2006 Bulletin 2006/15**

(51) Int Cl.:
*H01F 1/00* (2006.01)     *B42D 15/00* (2006.01)
*G07D 7/04* (2006.01)     *B41M 3/14* (2006.01)
*H01F 41/16* (2006.01)

(21) Application number: **04024139.0**

(22) Date of filing: **09.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **European Central Bank
60311 Frankfurt am Main (DE)**

(72) Inventors:
• **Arrieta, Antonio J.**
  **c/o European Central Bank**
  **60311 Frankfurt (DE)**

• **López, Raul Diez**
  **c/o Hunolt Tintas s.a.**
  **20200 Beasain**
  **Guipuzcoa (ES)**
• **Tejada, Javier, Dr.**
  **c/o Universitat de Barcelona**
  **08028 Barcelona (ES)**

(74) Representative: **Luderschmidt, Schüler & Partner GbR**
  **Patentanwälte,**
  **John-F.-Kennedy-Strasse 4**
  **65189 Wiesbaden (DE)**

(54) **Security document on which data can be stored and method and apparatus for reading data from and writing data on the security document**

(57)     A security document (1) on which data can be stored comprises on its surface a predetermined area (4) on which a magnetic composition is deposited. The magnetic composition comprises magnetic nanoparticles being superparamagnetic above a predetermined blocking temperature and being hysteretic below the blocking temperature, the blocking temperature being below room temperature. The data to be stored are not visible for the public. Since the blocking temperature is below room temperature, the data can also not be read by simply using a magnetic reading head. Therefore, the security document according to the invention allows the issuing authorities to record information without public awareness. For writing and reading data, the security document is cooled down to a temperature below the blocking temperature so that the magnetic nanoparticle composition has memory properties comparable to ordinary ferromagnetic materials.

Fig. 1

EP 1 646 056 A1

## Description

The present invention relates to a security document on which data can be stored as well as a method and an apparatus for reading data from and writing data on the security document.

The identification and authentication of security documents, e.g. bank notes, bank stocks, bonds, passports, identity cards, etc. is a long standing problem.

As the common machine language for bank checks handling the Magnetic Ink Character Recognition (MICR) was developed, the early work on this system dates back to 1950. The MICR is based on the use of specifically-designed symbols for different characters, e.g. numbers and special symbols as well. The symbols are printed on the security document by the use of a magnetic ink. For reading the data to be stored, a magnetic reading head is used which converts the symbol in a signal having a characteristic waveform for the identification thereof.

The principle of the MICR is that the symbols can be seen and easily read with the naked eye, even if the conventional shapes of the charcters are modified to take full advantage of the system. Furthermore, the data can be automatically read simply by using a magnetic reading head. The MICR, therefore, does not allow the issuing authorities of security documents to record information without public awareness. The MICR has further a limited storage capacity.

A typical storage magnetic medium consists of fine magnetic particles suspended in an organic binder adhering to a polymer substrate. During the recording process, different regions of the medium are briefly exposed to strong magnetic fields, so that each grain is magnetised in the desired direction. Each grain could thus store one bit of data, so greater storage density could ideally be achieved by a medium containing many small grains than one containing a few large grains. However, in order to serve as reliable storage devices, the grains must be capable of retaining their magnetisations for long periods of time in weaker, arbitrarily oriented ambient magnetic fields.

Very small magnetic particles for use in magnetic storage media, that are known typically have a particle size of about 0.1 micrometer. These particles readily retain magnetic patterns and thereby provide a method and means for magnetic information storage. However, these magnetic compositions comprising nanomagnetic particles have an inherent functional performance limitation and problem in that the magnetic compositions are superparamagnetic at room temperature, and are considered to be generally unsuitable for magnetic recording applications.

US-A-6,451,220, US-A-5,714,536 and US-A-5,889,091 refer to magnetic compositions comprising nanoparticles, the disclosure of which is incorporated herein by reference to its entirety.

The properties of magnetic nanoparticles is a result of the magnetic anisotropy owing to the symmetry of the crystal, the magnetic dipole interaction that breaks the magnet into domains and interactions of domain walls with defects, impurities, itinerant electrons, etc. The fundamental equation of motion of the magnetisation is that proposed by Landau - Lifshitz which may be used to explain the equilibrium magnetic configuration, the motion of domain walls, ferromagnetic resonance, spin waves, etc. For a typical ferromagnet, the magnetic moment of a nanometer size grain is already a few thousand Bohr's magnetons and is qualitatively similar to the arrow of a compass.

The two most important ingredients to explain the physics of a single domain particle or grain are: the strong exchange interaction between individual spins $\varepsilon_{exch}$ and the energy of magnetic anisotropy, $\varepsilon_{an}$ . The exchange has its origin in the Coulomb interaction between the electrons of neighbouring atoms and is of the order of the Curie temperature. The minimum of magnetic anisotropy corresponds when the magnetic moment is directed along a certain direction called the easy axis. Typically $\varepsilon_{exch}/\varepsilon_{an} \approx 105 - 10^3$. In the absence of an external magnetic field the up and down orientations of the net spin S have the same energy, existing, however, between the two orientations the barrier height U of the magnetic anisotropy. That is, the barrier height U determines, together with the temperature, the probability transition between the two orientations

$$\Gamma = \nu \exp\left(- U/ T\right)$$

where $\nu$ is the so called attempt frequency and U is expressed in Kelvin. The barrier height $U = KV$ where V is the volume of the particle and K is the magnetic anisotropy constant. When an external field H is applied along the easy axis of the particles it is verified that $U = KV$ $(1-H/H_0)$ where $H_0$ is the anisotropy field, $H_o = 2K/M_s$, being $M_s$ the saturation magnetisation.

At a given temperature, any magnetic system has a certain state that corresponds to the absolute minimum of its free energy. All magnetic systems are expected to relax towards that minimum. The metastability of single domain particles, which manifest itself as magnetic hysteresis and relaxation phenomena occurs when their magnetic moments, spins, are not oriented along the easy axis.

The magnetic characterisation of ensembles of nanometer size magnets needs to detect the evolution of the net magnetisation as a function of temperature, external magnetic field, time and ac-frequency.

In zero magnetic field, the total magnetic moment of a non-oriented ensemble of nanomagnets is zero. In the presence of magnetic field H, there is a net magnetisation along the direction of the field as a consequence of the uncompensation between the number of particles whose magnetic moments are aligned along the magnetic field and whose moments have different orientations.

The fact that nanomagnets have always a certain volume distribution f(V) allows to characterise these systems in terms of the so called blocking temperature

$$T_B = KV_o / \ln(\nu t)$$

where t is the characteristic time measurement time of the instrument and $V_o$ is the volume above which f(V)V drops rapidly. On that time scale, most of the magnetic moments of all the particles of the ensemble behave superparamagnetic. That is at $T > T_B$, the M(H,T) curve show classical Langevin behaviour. At $T < T_B$, there are time dependent phenomena and consequently M(H) show hysteresis.

It is an object of the present invention to provide a security document as a high density storage medium which allows the issuing authorities of security documents to record information without public awareness. Another object of the invention is to provide a method and an apparatus for writing data being not evident for the public on a security document and reading the data from the document, respectively.

Moreover, it is an object of the invention to provide a method for manufacturing nanomagnetic ink including magnetic nanoparticles as active elements of the ink suitable for the printing of the above security document in accordance with specific printing methods.

The security document according to the present invention comprises on its surface a predetermined area on which a magnetic composition comprising magnetic nanoparticles is deposited.

Above a predetermined blocking temperature the magnetic nanoparticle composition of the security document according to the invention is superparamagnetic, i.e. the composition exhibits zero hysteresis, and below the blocking temperature the nanoparticle composition is hysteretic, i.e. the material has memory properties comparable to ordinary ferromagnetic materials.

It is an important feature of the security document according to the invention that the blocking temperature from about 50°K to about 400°K, preferable below room temperature (20 °C).

The data to be stored are not visible for the public. Since the blocking temperature is preferably below room temperature, the data can also not be read by simply using a magnetic reading head. Therefore, the security document according to the invention allows the issuing authorities to record information without public awareness.

For writing data on the security document according to the invention, the document is cooled down to a temperature below the blocking temperature so that the magnetic nanoparticle composition has memory properties comparable to ordinary ferromagnetic materials. The nanoparticle composition on the predetermined area of the surface of the document is then magnetized in a pattern determined by the data to be stored. All well known methods for magnetic data storage can be used. After that the document is warmed up to a temperature above the blocking temperature so that the composition exhibits zero hysteresis and thus the data can not be read.

For reading data on the security document, the document is cooled down to a temperature below the blocking temperature so that the magnetic nanoparticle composition receives its memory properties again. The nanoparticle composition is then read by passing the document magnetic reading means. All well known methods for magnetic data storage can also be used. After that the document is warmed up to a temperature above the blocking temperature so that the data can not be read.

The nanoparticle composition allows a high data storage density so that the area on which the composition is deposited on the surface of the security document may be small.

The data can be erased by passing the predetermined area on the surface of the security document a high strong, constant magnetic field or a high-frequency alternating magnetic field.

An apparatus for writing data on the security document and reading data on the security document according to the invention comprises means for cooling the document to a temperature below the blocking temperature and magnetic writing means for magnetizing the nanoparticle composition on a predetermined area of the surface of the document in a pattern determined by the data to be stored and magnetic reading means for reading the data to be stored, respectively.

In a preferred embodiment the nanoparticle composition is embedded as an active element in an ink and the composition is deposited on the surface of the document by printing a pattern on a predetermined area of the surface of the document. It is an advantage that the document can be produced by using well known printing techniques, e.g. intaglio, offset, silk-screen, ink-jet, flexography, rotogravure printing.

Furthermore, a method for manufacturing nanomagnetic ink is disclosed, said nanomagnetic ink including nanosuperparamagnetic materials as active elements of the ink suitable for the printing of the above security document in accordance with specific printing methods.

A preferred embodiment of the manufacture process of nanomagnetic ink suitable for the use in specific printing techniques, such as intaglio or offset printing, includes the processing of varnish, organic and magnetic pigments as fundamental constituent parts of the manufacture process.

The processing of varnish has three primary functions. First, to wet the pigment particles and thereby to assist the process of dispersing the pigments in the vehicle system. The better the wetting property of the varnish, the easier it is to disperse the pigments thoroughly. The second function is to incorporate printability into the system. The ink must be stable enough to perform on the press and must ensure faithful reproduction of the printing surface on the printed material. Thirdly, the varnish must bind the pigments to the printed surface so that the final print dries to an acceptable film which the finished print is designed. Thus, varnishes impart such characteristics as gloss, rub resistance, product resistance, flexibility and adhesion to the finished print.

With reference to intaglio and offset printing, oleoresinous varnishes are produced in closed kettles at high temperature with different kind of resins and organic solvents.

The dispersion of dry materials including organic and magnetic pigments, fillers, etc. is normally done in a mixing vessel. The function of the mixer at this stage is to achieve an accepted level of dispersion. The pigment particles are thoroughly wetted by the varnish and stabilized to allow an optimal grinding process. Due to the mixing process, said organic and magnetic pigments are coated with a layer of varnish replacing the skin of moisture and air previously present.

Subsequently, having dispersed the above dry materials being organic and magnetic pigments, fillers, etc., in a preferred embodiment of the method, a grinding process is carried out using a mill for this operation. The passage of the paste ink through a mill breaks down the pigment agglomerates formed not only during production, but also during storage and transport of the dry pigments into primary particles which may be smaller than the required terminal fineness of the dispersion (normally below 5 microns) as well as being smaller than the roll gap.

The breakdown of these agglomerates, achieved by the high shear forces present in the nip areas between the rollers, causes an increase in the pigments surface areas. This, in turn, leads to the absorption of more binder, during the wetting process, producing an increase in viscosity for a given level of vehicle. The improvement in the degree of dispersion is normally accompanied by an improvement in the level of colour strength of the ink.

In a subsequent step, a let down process is carried out with the addition, in particular, of additives including waxes, antioxidants, antiset-off compounds, etc. to adjust the final properties of the ink.

Ultimately, a final mixing and milling of all components of the ink is carried out for reaching the final state of the ink.

In each step of the ink manufacture process there may be many specific laboratory tests to control the quality of ink. Some of them are the following: Fineness of grind gauge (particle size); Drying and setting time; Rheology, tack and viscosity; Printability; Set-off; Colour strength, hue and opacity; Gloss; Physical and Chemical fastness.

In a preferred method of the invention for manufacturing nanomagnetic ink, said ink is milled for breaking down the pigment agglomerates formed during production using a three roll mill.

In another preferred method of the invention for manufacturing nanomagnetic ink, the above mentioned specific laboratory tests for controlling the quality of ink are established in each step of the ink manufacture process.

For the purpose of illustrating the present invention, there is shown in the accompanying drawings an embodiment which is presently preferred; it being understood that the invention is not limited to the arrangement shown.

Fig. 1 illustrates a banknote on which data can be stored,

Fig. 2 illustrates a reading/writing apparatus for reading/writing the data, and

Fig. 3 illustrates a flow chart of intaglio monopigmentary base inks manufacture process.

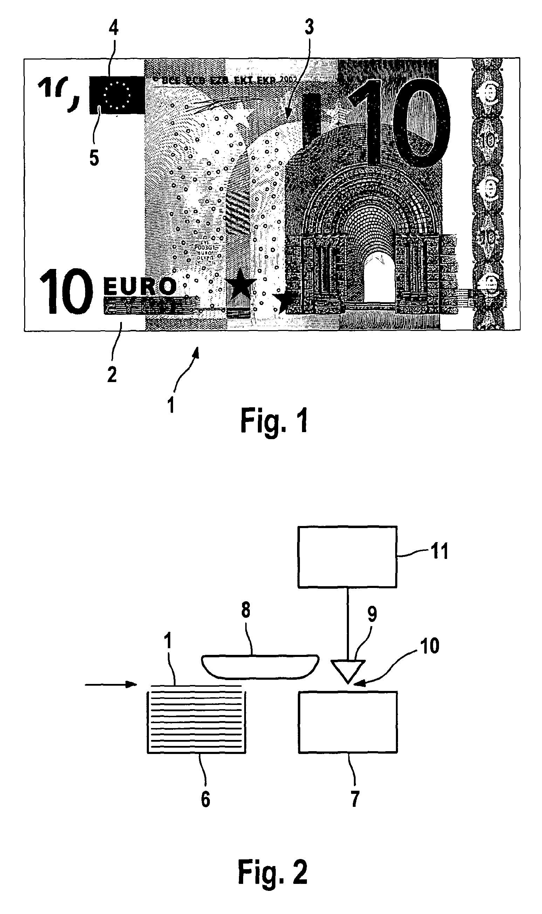

Fig. 1 shows the front side of a security document 1 according to the invention, which is a bank note in the preferred embodiment. The banknote 1 comprises a substrate made of a sheet of paper 2. A graphical design printing 3 is provided on the front and reverse side of the substrate.

The graphical design printing shows an rectangular area 4 on which a magnetic nanoparticle composition is deposited. The magnetic composition is embedded in the ink for printing the rectancular pattern 5 on the surface of the sheet of paper 2. Since the pattern is part of the graphical design printing of the bank note, it is not visible on which area of the bank note the magnetic composition is deposited.

Fig. 2 shows a schematic view of a reading/writing apparatus for reading/writing the data. The apparatus comprises a station 6 for receiving the security documents 1, e.g. bank notes, and a station 7 for transporting the banknotes along a linear path. The bank note receiving station 6 comprises means 8 for cooling the banknote down to a temperature below the blocking temperature of the magnetic nanoparticle composition. The transporting station 7 comprises writing means 9 for magnetizing the magnetic nanoparticle composition as well as reading means 9 for reading the data to be stored, e.g. a magnetic reading/writing head 9. The magnetic reading/writing head 9 is arranged in the path 10 for the bank notes close to the above-designated rectangular area of the bank note. As the bank note passes the magnetic head 9, the magnetic head produces an electrical signal for further processing in a data processing unit 11 to read the data from the document or the data processing unit produces a signal for the magnetic head to magnetize the magnetic composition to store the data on the document.

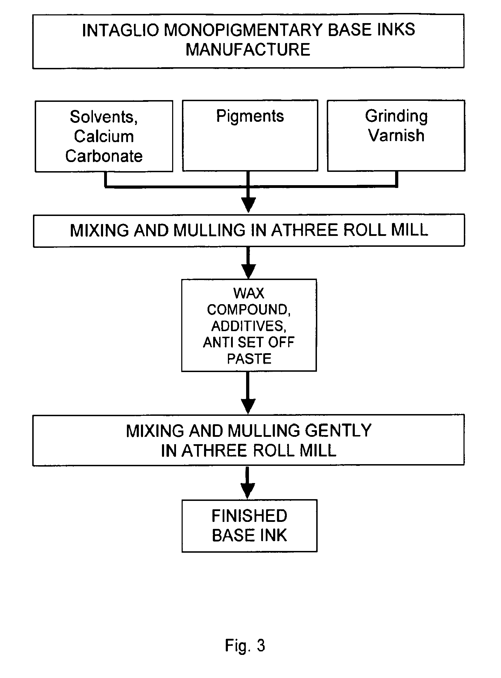

Fig. 3 shows a flow chart of an intaglio monopigmentary base inks manufacture process providing said nonomagnetic ink suitable for manufacturing the above security document. In the first step, three constituent parts of the manufacture process being grinding varnish, organic and magnetic pigments and solvents are mixed in a mixing vessel for dispersing the dry materials being organic and magnetic pigments thoroughly within the ink, thereby wetting the pigment particles in the vehicle system.

Subsequently, a milling process using a three roll mill is carried out so as to break down the pigment agglomerates within the ink formed during mixing, wherein the breakdown of these agglomerates is achieved by the high shear forces present in the nip areas between the rollers.

In a subsequent step, the addition of additives including waxes, antioxidants, antiset-off compounds, etc. is carried out to adjust the final properties of the ink.

In a final step, the ink again is exposed to a gentle mixing and milling, wherein the ink is milled using a three roll mill, before said monopigmentary base ink reaches the final state so as to be usable for the printing of said security document.

In this case, each step of the ink manufacture process is exposed to specific laboratory tests for controlling the quality of ink.

The following example of a magnetive nanoparticle composition to be embedded in an ink is illustrative of the invention:

Either $\gamma$-$Fe_2O_3$ or $CoFe_2O_4$ magnetic nanoparticles were prepared by matrix-mediated in-situ precipitation as disclosed in (1) Del Barco, E.; Asenjo, J.; Zhang, X. X.; Pieczynski, Julià.; Tejada, J.; Ziolo, R. F.; Fiorani, D.; Testa, A. M. *Chem. Mater. 2001,* 13, 1487-1490, (2) Tejada, J.; Zhang, X. X.; Kroll, E. C.; Bohigas, X.; Ziolo, R. *J. Appl. Phys.* 2000, 87, 8008 - 8012, (3) Ziolo, R. F.; Giannelis, E. P.; Weinstein, B. A.; O'Horo, M. P.; Ganguly, B. N.; Mehrotra, V.; Russell, M. W.; Huffmann, D. R. Science 1992, 257, 219 - 223, the disclosure of which is incorporated herein by reference of its entirety. Typically for $\gamma$-$Fe_2O_3$ magnetic nanoparticles, 240g of BIORAD AG50WX4-100 divinylbenzene crosslinked polystyrene sulfonated ion exchange resin with a nominal exchange capacity of 5.2 meq/g dry was suspended in 1000 ml and exchanged with 91.20 g of $FeCl_2 \cdot 4H_2O$ dissolved in 1000 ml of $H_2O$. After 1 hour of stirring at room temperature, solution is decanted and exchanger resin washed with water until no presence of Fe(II) in the rinses. The exchanged resin was resuspended in 1000 ml of $H_2O$ and then exposed to an aqueous solution of 100 g of NaOH in 1000 ml of $H_2O$ at 60°C which causes the precipitation of the corresponding hydroxide. The conversion to oxide is then obtained by dropwise addition of 192 ml of $H_2O_2$ at 30 % diluted in 240 ml of $H_2O$ into the heated basic suspension of the exchanged resin. Stirring at 60°C was maintained during 1 hour. The resin was then washed thoroughly with distilled water to neutral pH. The same procedure with minor changes is done for $CoFe_2O_4$ magnetic nanoparticles.

Particle size and concentration can be tuned by the number of cycles performed over the same resin by taking advantage of the presence of chemical addressable sites free at the end of each process. The number of cycles performed over the same matrix is used for modulating the particle characteristics. Also, the use of different types of resins can also modulate these properties for the same number of cycles.

## Claims

1. Security document on which data can be stored comprising on its surface a predetermined area (4) on which a magnetic composition is deposited, **characterized in that** the magnetic composition comprises magnetic nanoparticles being superparamagnetic above a predetermined blocking temperature and being hysteretic below the blocking temperature.

2. Security document according to claim 1, **characterized in that** the blocking temperature is from about 50°K to about 400°K.

3. Security document according to claim 1 or 2, **characterized in that** the nanoparticles are embedded in an ink deposited on a predetermined area of the surface of the security document.

4. Security document according to one of claims 1 to 3, **characterized in that** the security document is a banknote.

5. Method for writing data on a security document according to one of claims 1 to 4 with the following steps:

   cooling the security document down to a temperature below the blocking temperature of the magnetic nanoparticle composition, magnetizing the magnetic nanoparticle composition on the predetermined area of the surface of the security document in a pattern determined by the data to be stored, and warming the security document up to a temperature above the blocking temperature.

6. Method for reading data from a security document according to one of claims 1 to 4 with the following steps:

   cooling the security document down to a temperature below the blocking temperature of the magnetic nanoparticle composition, providing magnetic reading means and passing the security document the magnetc reading means,

warming the security document up to a temperature above the blocking temperature.

7. Apparatus for writing data on a security document according to one of claims 1 to 4 comprising:

means (8) for cooling the security document (1) down to a temperature below the blocking temperature, and
magnetic writing means (9) for magnetizing the magnetic nanoparticle composition on the predetermined area (4) of the surface of the security document (1) in a pattern determined by the data to be stored.

8. Apparatus for reading data from a security document according to one of claims 1 to 4 comprising:

means (8) for cooling the security document (1) down to a temperature below the blocking temperature, and
magnetic reading means (9) for reading the data stored on the predetermined area (4) of the surface of the security document (1).

9. Method for manufacturing a security document according to one of claims 1 to 4, with the steps of providing a substrate for said security document, providing an ink comprising magnetic nanoparticles, and printing at least one predetermined area of said substrate of the security document using said magnetic nanoparticles.

10. Method for manufacturing a security document according to claim 9, wherein
the step of providing an ink including magnetic nanoparticles comprises the following steps:

Mixing grinding varnish, organic and magnetic pigments and solvents, within the ink,
Subsequently, milling the ink for breaking down the pigment agglomerates within the ink formed during mixing,
Adding of additives, in particular, at least one of waxes, antioxidants, antiset-off compounds, and
Finally mixing and milling all components of the ink.

11. Method for manufacturing a security document according to claim 9 or 10, wherein the ink is milled using a three roll mill.

EP 1 646 056 A1

Fig. 1

Fig. 2

7

INTAGLIO MONOPIGMENTARY BASE INKS
MANUFACTURE

| Solvents, Calcium Carbonate | Pigments | Grinding Varnish |
|---|---|---|

MIXING AND MULLING IN ATHREE ROLL MILL

WAX COMPOUND, ADDITIVES, ANTI SET OFF PASTE

MIXING AND MULLING GENTLY
IN ATHREE ROLL MILL

FINISHED
BASE INK

Fig. 3

European Patent
Office

**EUROPEAN SEARCH REPORT**

Application Number

EP 04 02 4139

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/39217 A (NANOMAGNETICS LIMITED; MAYES, ERIC) 31 May 2001 (2001-05-31) | 1-4 | H01F1/00 |
| Y | * abstract * | 5-8 | B42D15/00 |
| | * page 9, line 7 - page 10, line 2 * | | G07D7/04 |
| | * page 11, lines 9-17 * | | B41M3/14 |
| | * example 6 * | | H01F41/16 |
| Y | GB 1 488 660 A (EMI LTD) 12 October 1977 (1977-10-12) * page 1, lines 8-13,69-91 * | 5-8 | |
| A | * page 2, lines 16-52,76-86 * | 1-4 | |
| Y,D | US 6 451 220 B1 (ZIOLO RONALD F ET AL) 17 September 2002 (2002-09-17) * abstract * * column 2, lines 12-32 * * column 3, lines 33-64 * * column 7, line 55 - column 8, line 14 * * column 12, line 61 - column 13, line 9 * | 5-8 | |
| A | * example 1 * | 1-4,9-11 | |
| Y | EP 0 699 964 A (XEROX CORPORATION) 6 March 1996 (1996-03-06) * abstract * * page 4, lines 9-27 * * page 5, lines 42-47 * | 10,11 | |
| Y,D | TEJADA JAVIER ET AL: "Solid containing rotationally free nanocrystalline gamma-Fe2O3: Material for a nanoscale magnetic compass?" JOURNAL OF APPLIED PHYSICS, AMERICAN INSTITUTE OF PHYSICS. NEW YORK, US, vol. 87, no. 11, 1 June 2000 (2000-06-01), pages 8008-8012, XP012049192 ISSN: 0021-8979 * abstract * * page 8008, right-hand column * | 10,11 | |

TECHNICAL FIELDS
SEARCHED (Int.Cl.7)

H01F
B42D
G07D
B41M
G11B

-/--

The present search report has been drawn up for all claims

| Place of search | Date of completion of the search | Examiner |
|---|---|---|
| Munich | 4 March 2005 | Reder, M |

EPO FORM 1503 03.82 (P04C01)

**European Patent Office**

**EUROPEAN SEARCH REPORT**

Application Number

EP 04 02 4139

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 101 18 679 A1 (HENKEL KGAA) 24 October 2002 (2002-10-24) * paragraph [0002] * * paragraphs [0042] - [0047] * ----- | 1,4 | |
| A | EP 1 134 752 A (KABUSHIKI KAISHA TOSHIBA) 19 September 2001 (2001-09-19) * abstract * * example 3 * ----- | 1,3,4 | |

TECHNICAL FIELDS
SEARCHED (Int.Cl.7)

The present search report has been drawn up for all claims

| Place of search | Date of completion of the search | Examiner |
|---|---|---|
| Munich | 4 March 2005 | Reder, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 4139

This annex lists the patent family members relating to the patent documents cited in  the above-mentioned European search report.
The members are as contained in the European Patent Office EDP file on
The European Patent Office is in no way  liable for these particulars which are merely  given for the purpose of information.

04-03-2005

| Patent document cited in search report | | Publication date | Patent family member(s) | | Publication date |
|---|---|---|---|---|---|
| WO  0139217 | A | 31-05-2001 | AU | 2380801 A | 04-06-2001 |
| | | | BR | 0015816 A | 16-07-2002 |
| | | | CA | 2392381 A1 | 31-05-2001 |
| | | | CN | 1399783 A | 26-02-2003 |
| | | | EP | 1232503 A1 | 21-08-2002 |
| | | | WO | 0139217 A1 | 31-05-2001 |
| | | | JP | 2003515921 T | 07-05-2003 |
| | | | MX | PA02005229 A | 25-09-2003 |
| | | | US | 6815063 B1 | 09-11-2004 |
| GB  1488660 | A | 12-10-1977 | NONE | | |
| US  6451220 | B1 | 17-09-2002 | AU | 3888397 A | 07-08-1998 |
| | | | EP | 1010016 A1 | 21-06-2000 |
| | | | IL | 130991 A | 01-12-2002 |
| | | | JP | 10208236 A | 07-08-1998 |
| | | | JP | 2001509057 T | 10-07-2001 |
| EP  0699964 | A | 06-03-1996 | US | 6048920 A | 11-04-2000 |
| | | | BR | 9503634 A | 02-04-1996 |
| | | | CA | 2151967 A1 | 16-02-1996 |
| | | | DE | 69517563 D1 | 27-07-2000 |
| | | | DE | 69517563 T2 | 19-10-2000 |
| | | | EP | 0699964 A1 | 06-03-1996 |
| | | | ES | 2148443 T3 | 16-10-2000 |
| | | | JP | 8073652 A | 19-03-1996 |
| DE  10118679 | A1 | 24-10-2002 | WO | 02084608 A2 | 24-10-2002 |
| EP  1134752 | A | 19-09-2001 | JP | 2001261999 A | 26-09-2001 |
| | | | EP | 1134752 A2 | 19-09-2001 |
| | | | EP | 1372163 A1 | 17-12-2003 |
| | | | US | 2003128029 A1 | 10-07-2003 |
| | | | US | 2001022259 A1 | 20-09-2001 |

EPO FORM P0459

For more details about this annex : see Official Journal of the European Patent Office, No. 12/82